# EUROPÄISCHE PATENTSCHRIFT

(11) **EP 3 878 030 B1**
(45) Veröffentlichungstag und Bekanntmachung des Hinweises auf die Patenterteilung: **01.05.2024**
(21) Anmeldenummer: 19794118.0
(22) Anmeldetag: 21.10.2019
(51) Int. Cl.: H01M 4/02, H01M 10/04, H01M 4/04, H01M 10/0583, H01M 10/0585, H01M 50/46

(54) **VERFAHREN ZUR HERSTELLUNG EINER KATHODENVORRICHTUNG, VERFAHREN ZUR HERSTELLUNG EINES ELEKTRODENVERBUNDES UND BATTERIE**
METHOD OF PRODUCTION OF A CATHODE DEVICE, METHOD OF PRODUCTION OF AN ELECTRODE COMPOSITE AND BATTERY
MÉTHODE DE PRODUCTION D'UN DISPOSITIF DE CATHODE, MÉTHODE DE PRODUCTION D'UNE CATHODE COMPOSITE ET BATTERIE

(30) Priorität: 07.11.2018 DE 102018219000
(43) Veröffentlichungstag der Anmeldung: 15.09.2021
(73) Patentinhaber: VOLKSWAGEN AG, 38440 Wolfsburg (DE)
(72) Erfinder: TORNOW, Alexander, 29369 Ummern (DE); RATHMANN, Sven, 38231 Salzgitter (DE); STUEHM-VAN-DOREN, Kai, 38114 Braunschweig (DE)
(74) Vertreter: FDST Patentanwälte
(86) Internationale Anmeldenummer: PCT/EP2019/078545
(87) Internationale Veröffentlichungsnummer: WO 2020/094375

(56) Entgegenhaltungen:
- EP-A1- 2 892 102
- DE-A1-102010 055 608
- DE-A1-102014 113 588
- DE-A1-102015 218 533
- DE-A1-102016 214 239
- US-A1- 2015 202 647

## Beschreibung

Die Erfindung betrifft ein Verfahren zur Herstellung einer Kathodenvorrichtung für eine Batterie, insbesondere eines Kraftfahrzeugs, wobei ein Kathodenband bereitgestellt und eine Kathode aus dem Kathodenband ausgeschnitten wird. Des Weiteren betrifft die Erfindung ein Verfahren zur Herstellung eines Elektrodenverbundes, eine Batterie mit einem solchen Elektrodenverbund sowie ein Kraftfahrzeug mit einer solchen Batterie.

Ein elektrisch angetriebenes Kraftfahrzeug weist typischerweise eine Batterie (Traktions-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Batterie speichert (BEV, battery electric vehicle), ein Elektrofahrzeug mit einem Reichweitenverlängerer (REEV, range extended electric vehicle), ein Hybridfahrzeug (HEV, hybrid electric vehicle) und/oder ein Plug-In-Hybridfahrzeug (PHEV, plug-in hybrid electric vehicle) zu verstehen.

Eine solche (Traktions-) Batterie weist zumindest eine Batteriezelle auf, in welcher ein Elektrodenverbund mit einer Anzahl an Kathoden und Anoden aufgenommen ist, wobei die Kathoden und die Anoden beispielsweise übereinander gestapelt sind, und wobei zwischen den Kathoden und den Anoden jeweils ein Separator angeordnet ist.

Ein Verfahren zur Herstellung eines Elektrodenverbundes einer Batteriezelle ist beispielsweise aus der DE 10 2015 218 533 A1 bekannt. Hierbei wird eine bandförmige erste Elektrodenfolie an einer ersten Seite zurechtgeschnitten, so dass eine erste Kontaktfahne, welche zur Kontaktierung der ersten Elektrodenfolie in der Batteriezelle vorgesehen ist, freiliegt. Aus einer zweiten Elektrodenfolie wird eine zweite Elektrode, insbesondere eine Kathode, mit einer zweiten Kontaktfahne ausgeschnitten und zwischen zwei Separatorfolien eingebracht. Anschließend werden die beiden Separatorfolien in über die zweite Elektrode hinaus stehenden Bereichen, beispielsweise durch Laminieren oder Kleben, unter Bildung einer ersten Stapelanordnung miteinander verbunden.

Weitere Verfahren und Vorrichtungen zur Herstellung einer Elektrode sind aus der EP 2 892 102 A1, der DE 10 2014 113588 A1, der US 2015/202647 A1, der DE 10 2015 218533 A1, der DE 10 2016 214239 A1 sowie aus der DE 10 2010 055608 A1 bekannt.

Die erste Elektrodenfolie und die Stapelanordnung werden in einem darauffolgenden Schritt übereinandergelegt, wobei die erste Kontaktfolie und die Stapelanordnung zueinander ausgerichtet werden, so dass deren Kontaktfahnen zueinander versetzt sind und ein Elektrodenverbund entsteht. Dieser Elektrodenverbund wird zurechtgeschnitten.

Der Erfindung liegt die Aufgabe zugrunde, ein geeignetes Verfahren zur Herstellung einer Kathodenvorrichtung sowie ein geeignetes Verfahren zur Herstellung eines Elektrodenverbundes anzugeben. Insbesondere sollen die Verfahren möglichst aufwandsarm sein, und/oder eine der Kathode der Kathodenvorrichtung möglichst sicher gegen ein Verrutschen gehalten sein. Des Weiteren soll eine Batterie mit einem solchen Elektrodenverbund und ein Kraftfahrzeug mit einer solchen Batterie angegeben werden.

Bezüglich des Verfahrens zur Herstellung der Kathodenvorrichtung wird diese Aufgabe erfindungsgemäß gelöst durch die Merkmale des Anspruchs 1, sowie durch die Merkmale des Anspruchs 2. Hinsichtlich des Verfahrens zur Herstellung eines Elektrodenverbundes wird die Aufgabe erfindungsgemäß gelöst durch die Merkmale des Anspruchs 7. Hinsichtlich der Batterie und des Kraftfahrzeugs wird die Aufgabe erfindungsgemäß gelöst durch die Merkmale des Anspruchs 8 bzw. des Anspruchs 9. Vorteilhafte Ausgestaltungen und Weiterbildungen sind Gegenstand der Unteransprüche.

Eine erste Variante eines Verfahrens ist zur Herstellung einer Kathodenvorrichtung für eine Batterie geeignet und eingerichtet. Insbesondere ist die Batterie als eine (Traktions-) Batterie eines elektrisch angetriebenen Kraftfahrzeugs vorgesehen. Beispielsweise ist die Batterie eine Li-Ionen-Batterie.

In einem ersten Schritt wird ein Kathodenband bereitgestellt. Aus diesem Kathodenband wird in einem darauffolgenden zweiten Schritt eine Kathode ausgeschnitten. Beispielsweise ist das Kathodenband auf einer Rolle (Coil) aufgewickelt und wird zum Ausscheiden der Kathode abgewickelt. Zweckmäßigerweise erfolgt das Ausschneiden der Kathode am abgewickelten Ende des Kathodenbands. Beispielsweise erfolgt das Ausschneiden der Kathode mechanisch. Zweckmäßigerweise wird hierzu ein Messer oder ein Stanzwerkzeug herangezogen.

Die aus dem Kathodenband ausgeschnittene Kathode ist blattförmig, also flächig, d.h. die Kathode weist eine Ausdehnung in einer Raumrichtung auf, welche im Vergleich zu deren Ausdehnung in einer zu dieser Raumrichtung senkrecht orientierte Ebene vergleichsweise klein ist. Ferner weist die Kathode zweckmäßigerweise an einer ersten Stirnseite eine Kontaktierung zur elektrischen Kontaktieren im Montagezustand in der Batterie auf.

In einem dritten Schritt wird die Kathode zwischen zwei bandförmige Separatorfolien eingebracht. Insbesondere werden die beiden Separatorfolien dabei von jeweils einer Rolle (Coil) abgewickelt. Geeigneter Weise wird die Kathode derart zwischen die beiden Separatorfolien eingebracht, dass die an die erste Stirnseite angrenzenden flächigen Kathodenseiten vollständig mittels der beiden Separatorfolien überdeckt sind. Dabei ragt die Kontaktierung der Kathode zweckmäßig seitlich, also in einer Richtung senkrecht zu einer Band-Längsrichtung der bandförmigen Separatorfolie und in einer mittels der Kathode aufgespannten Ebene, über die beiden Separatorfolien hinaus und liegt somit frei. Beispielsweise fluchtet die sich in Band-Längsrichtung erstreckende Kante der Separatorfolien mit der ersten Stirnseite. Die Band-Längsrichtung ist dabei die Haupterstreckungsrichtung der jeweiligen bandförmigen Separatorfolie.

In einem gemeinsamen vierten Schritt werden sowohl die beiden Separatorfolien unter Bildung von entsprechenden Separatorfolienausschnitten zugeschnitten als auch diese beiden Separatorfolienausschnitte miteinander verbunden. Das Zuschneiden erfolgt dabei in einem über die Kathode ragenden Bereich der beiden Separatorfolien. Beim Zuschneiden werden die beiden Separatorfolienausschnitte in diesem Bereich miteinander verbunden, insbesondere miteinander verschmolzen.

Zusammenfassend erfolgt das Zuschneiden sowie das Verbinden der beiden Separatorfolienausschnitte also vorteilhafterweise in einem Arbeitsgang, insbesondere gleichzeitig, weshalb ein Herstellungsaufwand und Herstellungskosten einer solchen Kathodenvorrichtung reduziert sind.

Hierzu wird gemäß einer zweckmäßigen Weiterbildung ein beheiztes Rollenmesser oder ein Laser herangezogen. Das beheizte Rollenmesser bzw. der Laser schneidet die beiden Separatorfolien in den dafür vorgesehenen Bereichen, wobei die beiden Separatorfolienabschnitte aufgrund der thermischen Einwirkung des Lasers bzw. des beheizten Rollenmessers miteinander verschmelzen. Hierzu ist der Laser, insbesondere dessen Intensität und dessen Fokusdurchmesser, entsprechend der Eigenschaften der Separatorfolie, beispielsweise deren Reflexionseigenschaften oder deren Material, eingestellt. In dem mittels des Lasers zu verschmelzenden Bereich, müssen hierbei die beiden Separatorfolienausschnitte möglichst nahe beieinander liegen, insbesondere soll ein sog. Nullspalt gebildet sein. Hierzu wird beispielsweise eine Maske herangezogen, mittels welcher die beiden Separatorfolienausschnitte aufeinander gepresst werden.

Das Zuschneiden der Separatorfolien erfolgt dabei beispielsweise lediglich vor und nach der Kathode bezüglich der Band-Längsrichtung. Somit werden die beiden bandförmigen Separatorfolien abgelängt. Alternativ hierzu erfolgt das Zuschneiden und das Verbinden in Bereichen, welche der ersten Stirnseite abgewandt sind. Auf diese Weise bilden die verbundenen Separatorfolienausschnitte eine Tasche, in welcher die Kathode aufgenommen ist.

Weiter alternativ erfolgt das Zuschneiden und das Verbinden der Separatorfolien in einem Bereich, welcher sich entlang des gesamten Umfangs der Kathode erstreckt, vorzugsweise mit Ausnahme derjenigen Stellen, an welchen die Separatorfolien an der Kontaktierung angeordnet sind bzw. anliegen. Dies wird auch als Kontur-Beschnitt bezeichnet.

Allenfalls ist aufgrund des Verschmelzens der beiden Separatorfolienausschnitte ein Verrutschen der Kathode gegenüber der Separatorfolien verhindert oder eine Gefahr dessen zumindest verringert. Bei Verwendung der Kathodenvorrichtung in einem Elektrodenverbund sind deshalb vorteilhafterweise ein Kapazitätsverlust, eine Beschädigung und/oder ein Kurzschluss der Kathode mit einer Anode aufgrund eines Verrutschens der Kathode verhindert oder eine solche Gefahr zumindest verringert.

Gemäß einer alternativen zweiten Variante des Verfahrens zur Herstellung der Kathodenvorrichtung für eine Batterie, insbesondere eines Kraftfahrzeugs, erfolgen die ersten beiden Schritte analog zur ersten Variante des Verfahrens zur Herstellung der Kathodenvorrichtung. Also wird eine Kathode aus einem bereitgestellten Kathodenband ausgeschnitten.

In einem darauffolgenden dritten Schritt wird eine einzelne bandförmige Separatorfolie gefalzt und derart an der Kathode angeordnet, dass die Knickkante der Separatorfolie an einer Anlage-Stirnseite der Kathode anliegt, und dass die Kathode beidseitig von jeweils einem Separatorfolienabschnitt der Separatorfolie überdeckt wird.

Die Anlage-Stirnseite der Kathode ist dabei zweckmäßigerweise die der ersten Stirnseite gegenüberliegende, insbesondere parallel zu dieser verlaufende, Stirnseite. Die beiden Separatorfolienabschnitte überdecken dabei die Kathode vorzugsweise vollständig, vorzugsweise mit Ausnahme der an der ersten Stirnseite angeordneten Kontaktierung.

Gemäß einer ersten Ausgestaltung der zweiten Variante des Verfahrens wird die bandförmige Separatorfolie derart gefalzt, dass die Knickkante entlang deren Band-Längsrichtung verläuft.

An das Anordnen der Separatorfolie an der Kathode anschließend, wird in einem gemeinsamen Schritt sowohl die Separatorfolie in einem Bereich von Stirnseiten der Kathode zugeschnitten, in welchem die Separatorfolie über die Kathode ragt als und welcher der Anlage-Stirnseite abgewandt ist, als auch die beiden Separatorfolienabschnitte miteinander verbunden, insbesondere miteinander verschmolzen. Hierzu wird in analoger Weise zur ersten Variante des Verfahrens ein Laser oder ein beheiztes Rollenmesser herangezogen.

Gemäß einer vorteilhaften Weiterbildung der ersten Variante und/oder der ersten Ausgestaltung der zweiten Variante des Verfahrens wird die Kathode mit den beiden Separatorfolienausschnitten bzw. mit den Separatorfolienabschnitten in einem Schritt vor dem Zuschneiden der Separatorfolien bzw. der Separatorfolie laminiert. Aufgrund dessen ist die Kathode sicher zwischen den Separatorfolienausschnitten bzw. zwischen den Separatorfolienabschnitten gehalten.

Zweckmäßigerweise werden zum Laminieren der Kathode mit den Separatorfolienabschnitten bzw. mit den Separatorfolienausschnitten sog. Laminierwalzen herangezogen, welche einen Druck auf die Separatorfolienabschnitte bzw. auf die Separatorfolienausschnitte ausüben. Mittels der Laminierwalzen werden vorteilhaft zudem die Separatorfolienabschnitte bzw. die Separatorfolienausschnitte in einem Bereich vor und nach der Kathode bezüglich deren Förderrichtung, also vor und nach der Kathode bezüglich der Band-Längsrichtung aufeinander gepresst. Aufgrund dessen ist der Abstand der beiden Separatorfolienabschnitte bzw. der Separatorfolienausschnitte vergleichsweise klein, insbesondere weisen die beiden Separatorfolienabschnitte bzw. die Separatorfolienausschnitte einen Nullspalt zueinander auf. Infolgedessen ist ein Verschmelzen der Separatorfolienabschnitte bzw. die Separatorfolienausschnitte in diesem Bereich mittels eines Lasers ohne die Verwendung der Maske ermöglicht. Lediglich sofern die Separatorfolienabschnitte bzw. die Separatorfolienausschnitte in einem Bereich neben der Kathode, also in einem Bereich der ersten Stirnseite und/oder der Anlage-Stirnseite, mittels des Lasers miteinander verschmolzen werden sollen, ist für diese Bereiche eine Maske notwendig.

Grundsätzlich kann gemäß einer zweiten Ausführung der zweiten Variante des Verfahrens die bandförmige Separatorfolie auch derart gefalzt werden, dass deren Knickkante senkrecht zur Band-Längsrichtung verläuft. Anschließend wird die Kathode zwischen die Separatorfolienabschnitte eingebracht und die Separatorfolie wird zugeschnitten. Insbesondere wird die Separatorfolie dabei mittels eines sogenannten Transversalschnitts, also senkrecht zur Band-Längsrichtung, abgeschnitten. Vorzugsweise fluchtet das Ende des Bandes, also das Ende der Separatorfolie, bezüglich der Band-Längsrichtung mit der ersten Stirnseite der Kathode. Vorteilhaft ist infolgedessen lediglich der Transversalschnitt, also ein Ablängen der Separatorfolie, erforderlich.

Anschließend wird die Kathode mit den beiden Separatorfolienabschnitten laminiert und die Kathode somit gegen ein Verrutschen gesichert. Vorzugsweise zusätzlich werden die beiden Separatorfolienabschnitte zur Sicherung der Kathode gegen ein Verrutschen in einem Bereich der an die Anlage-Stirnseite angrenzenden Stirnseiten der Kathode miteinander verbunden, insbesondere miteinander verschmolzen.

Die Vorteile der zweiten Variante des Verfahrens liegen insbesondere darin, dass lediglich eine bandförmige Separatorfolie und entsprechend lediglich eine Abwickelvorrichtung notwendig sind. Des Weiteren sind die die Kathode umfassenden Separatorfolienabschnitte einteilig, weshalb die Kathode bereits durch die an deren Anlage-Stirnseite anliegende Knickkante der Separatorfolie gegen ein Verrutschen gesichert ist.

Vorzugsweise wird mittels der ersten und/oder mittels der zweiten Variante der Vorrichtung eine Vielzahl an Kathodenvorrichtungen hergestellt. Diese werden beispielsweise in ein Magazin eingebracht und zur Herstellung eines Elektrodenverbundes bereitgestellt.

Gemäß einem Verfahren zur Herstellung eines Elektrodenverbundes wird in einem ersten Schritt eine Anode bereitgestellt. Die Anode ist dabei, insbesondere blattförmig und weist eine erste Stirnseite mit einer Kontaktierung auf.

In einem zweiten Schritt wird eine nach einem der oben dargestellten Varianten hergestellte Kathodenvorrichtung zur Herstellung des Elektrodenverbundes bereitgestellt. Im Zuge der Herstellung der Kathodenvorrichtung nach einer der oben dargestellten Varianten, wird die Separatorfolie dabei unter Bildung der Separatorfolienabschnitte bzw. der Separatorfolienausschnitte derart zugeschnitten, dass deren Abmessung, also deren Ausdehnung in einer durch die Separatorfolienausschnitte bzw. durch die Separatorfolienabschnitte aufgespannten Ebene, mit der Abmessung der Anode übereinstimmt.

Anschließend werden die Kathodenvorrichtung und die Anode übereinander gestapelt. Die Kathodenvorrichtung und die Anode werden mittels eines Anschlags zueinander ausgerichtet. Die Ausrichtung mittels eines Anschlags ist dabei aufgrund der übereinstimmenden Abmessung der Kathodenvorrichtung und der Anode ermöglicht. Aufgrund die Verwendung eines Anschlags sind vorteilhafterweise keine optische Vorrichtung notwendig, mittels welcher die Position und/oder die Orientierung der Kathodenvorrichtung und der hierzu separaten Anode erfasst werden. Infolge dessen ist ein vergleichsweise aufwandsarmes und kostensparendes Herstellungsverfahren realisiert.

Insbesondere werden mehrere Kathodenvorrichtungen und mehrere Anoden alternierend mittels des Anschlags übereinander gestapelt, wobei die Abmessungen aller Kathodenvorrichtung mit den Abmessungen aller Anoden übereinstimmen.

In vorteilhafter Ausgestaltung weist eine Batterie, insbesondere eine Li-Ionen Batterie, einen Elektrodenverbund auf, welcher nach der oben dargestellten Variante hergestellt ist. Ferner weist gemäß einer vorteilhaften Weiterbildung ein Kraftfahrzeug eine solche Batterie auf.

Nachfolgend werden Ausführungsbeispiele der Erfindung anhand einer Zeichnung näher erläutert. Darin zeigen:
- Fig. 1: in schematischer Darstellung ein Kraftfahrzeug mit einer Batterie mit Batteriezellen, wobei die Batteriezellen einen Elektrodenverbund mit einer Anode und mit einer Kathodenvorrichtung aufweisen,
- Fig. 2: eine schematische Darstellung einer ersten Variante eines Verfahrens zur Herstellung der Kathodenvorrichtung, wobei eine Kathode zwischen zwei Separatorfolien eingebracht und die Separatorfolien zugeschnitten und dabei miteinander verbunden werden,
- Fig. 3: eine schematische Darstellung einer ersten Ausgestaltung einer zweiten Variante des Verfahrens zur Herstellung der Kathodenvorrichtung, wobei eine einzelne bandförmige Separatorfolie entlang deren Band-Längsrichtung gefalzt und beidseitig der Kathode angeordnet wird,
- Fig. 4: eine schematische Darstellung einer zweiten Ausgestaltung der zweiten Variante eines Verfahrens zur Herstellung der Kathodenvorrichtung, wobei die einzelne bandförmige Separatorfolie entlang deren Band-Querrichtung gefalzt wird, und wobei die Kathode zwischen Separatorfolienabschnitte der Separatorfolie eingebracht wird,
- Fig. 5a: in einer Draufsicht eine Kathodenvorrichtung mit einer Kathode, welche zwischen die gefalzte Separatorfolie eingebracht ist, wobei die an den flächigen Seiten der Kathode anliegenden Separatorfolienabschnitte der Separatorfolie unter Bildung einer Tasche miteinander verbunden sind,
- Fig. 5b,c: Schnittdarstellungen der Kathodenvorrichtung entsprechend der Schnittebenen Vb bzw. Vc der Fig. 5a, und
- Fig. 6: schematisch ein Verfahren zur Herstellung des Elektrodenverbunds.

Einander entsprechende Teile und Größen sind in allen Figuren stets mit gleichen Bezugszeichen versehen.

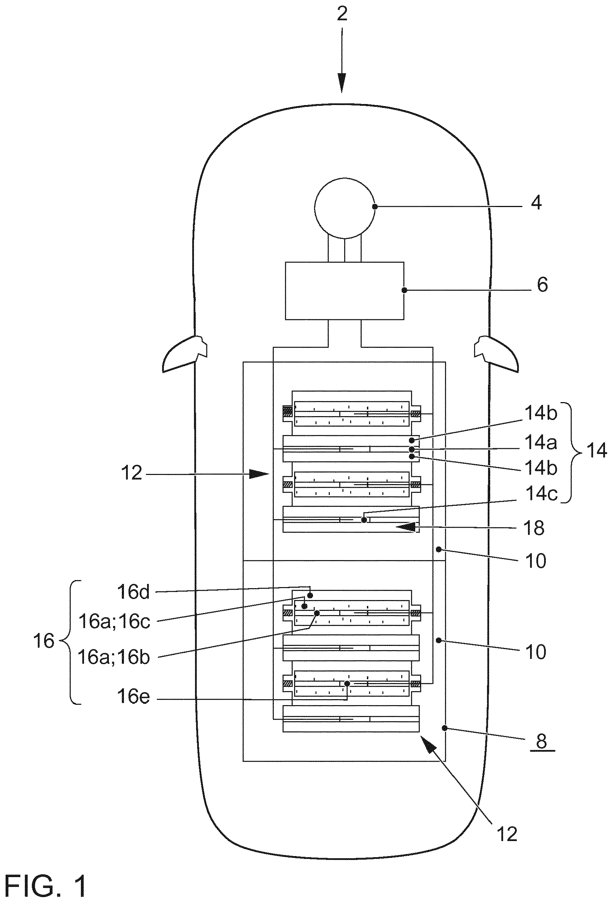

Das in Fig. 1 gezeigte Kraftfahrzeug 2 ist elektrisch angetrieben. Hierzu weist das Kraftfahrzeug 2 einen Elektromotor 4 auf, welcher über einen Wechselrichter 6 mit einer Batterie 8 verbunden ist. Die Batterie 8 weist eine Anzahl an Batteriezellen 10 auf, wobei zum Zwecke einer verbesserten Übersicht lediglich zwei Batteriezellen 10 dargestellt sind. In jeder der Batteriezellen 10 ist ein Elektrodenverbund 12 aufgenommen. Dessen Anoden 14 und dessen Kathodenvorrichtungen 16 sind abwechselnd übereinander gestapelt.

Jede der Anoden 14 weist jeweils eine beispielsweise als Kupferfolie ausgebildete Anodenfolie 14a auf, welche beidseitig, also an deren flächigen Seiten, mit einem ersten Aktivmaterial 14b, beispielsweise Graphit, beschichtet ist.

Jede der Kathodenvorrichtungen 16 weist eine Kathode 16a mit einer Kathodenfolie 16b, beispielsweise eine Aluminiumfolie, auf. Diese ist beidseitig mit einem zweiten Aktivmaterial 16c, beispielsweise mit einem Lithium-Übergangsmetalloxid, beschichtet. Das zweite Aktivmaterial 16c ist dabei flächig punktiert dargestellt. Zusammenfassend bilden die Kathodenfolie 16b und das zweite Aktivmaterial 16c die Kathode 16a.

Des Weiteren weisen die Kathodenvorrichtungen 16 Separatorfolien 16d auf, welche die Kathoden16a an deren flächigen Seiten überdecken. Diese weisen beispielsweise Polyethylen und/oder Polypropylen auf. So sind zwischen den Anoden 14 und den Kathoden 16a die Separatorfolien 16d angeordnet.

Die Anodenfolie 14a sowie die Kathodenfolie 16b weisen an deren ersten Stirnseite 18 jeweils eine Kontaktierung 14c bzw. 16e zum elektrischen Kontaktieren der Elektroden, also der Anoden 14 und der Kathoden 16a, auf.

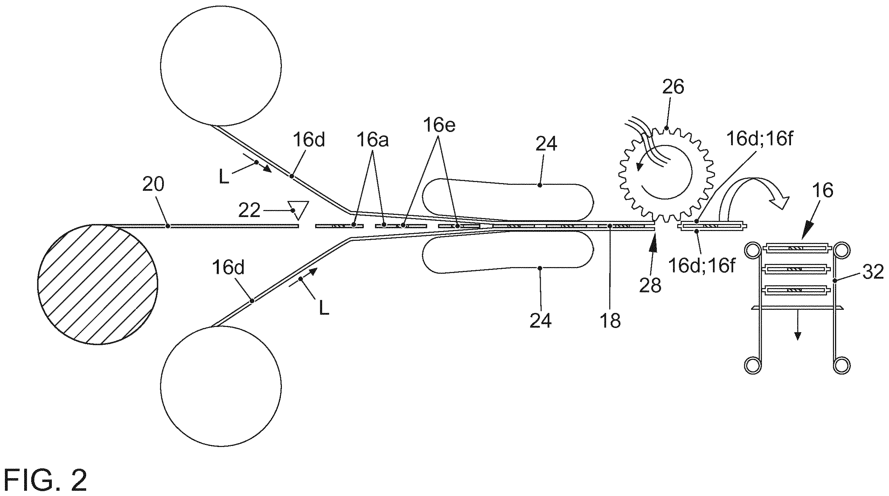

In der Fig. 2 ist schematisch eine Verfahrensablauf zur Herstellung der Kathodenvorrichtung 16 in einer ersten Variante dargestellt. In einem ersten Schritt wird ein auf einer (Coil) Rolle aufgewickeltes Kathodenband 20 bereitgestellt. Dieses weist die mit dem zweiten Aktivmaterial 16c beschichtete Kathodenfolie16b auf. In einem zweiten Schritt wird das Kathodenband 20 abgewickelt und die Kathode 16a endseitig mittels einer Schneidvorrichtung 22 ausgeschnitten.

In einem dritten Schritt wird die Kathode 16a zwischen zwei bandförmige Separatorfolien 16d mit einer jeweiligen Band-Längsrichtung L eingebracht. Hierzu werden die Separatorfolien 16d sowie die Kathode 16a mittels einer Fördervorrichtung 24 bewegt und aufeinander gestapelt. Die Separatorfolien 16d werden hierbei jeweils von einer Rolle (Coil) abgewickelt. Die Fördervorrichtung 24 weist hier zwei Vakuumbänder auf, wobei sich deren Abstand zueinander in Band-Längsrichtung verringert. Infolgedessen werden die Separatorfolien 16d in Bereichen vor und nach der Kathode 16a bezüglich der Band-Längsrichtung zusammengepresst.

Ferner sind dabei die an die erste Stirnseite 18 angrenzenden flächigen Seiten der Kathode 16a vollständig mittels der beiden Separatorfolien 18d überdeckt. Die Kontaktierung 16e ragt aus der Zeichenebene, also in einer Richtung senkrecht zur Band-Längsrichtung L und in einer mittels der Kathode 16a aufgespannten Ebene, über die beiden Separatorfolien 16d seitlich hinaus.

In einem vierten Schritt werden die beiden Separatorfolien 16d unter Bildung von entsprechenden Separatorfolienausschnitten 16f mittels eines schematisch, und zum Zwecke einer verbesserten Übersicht nicht maßstabsgetreu dargestellten, beheizten Rollenmessers 26 zugeschnitten. Dabei verschmelzen die beiden Separatorfolienausschnitte 16f aufgrund der thermischen Einwirkung des Rollenmessers. Das Zuschneiden und Verschmelzen der beiden Separatorfolien 16d erfolgt dabei in einem über die Kathode 16a ragenden Bereich 28 vor und nach der Kathode 16a bezüglich der Band-Längsrichtung L.

In einer nicht dargestellten Alternative werden die beiden Separatorfolien 16d zusätzlich im Bereich einer der ersten Stirnseite 18 gegenüberliegenden zweiten Stirnseite 30 zugeschnitten und miteinander verschmolzen. Auf diese Weise ist eine Tasche mittels der miteinander verschmolzenen Separatorfolienausschnitte 16f gebildet, welche die Kathode 16a sicher gegen ein Verrutschen hält.

Anschließend wird die Kathodenvorrichtung 16 in ein Magazin 32 eingebracht und zur Herstellung eines Elektrodenverbundes 12 bereitgestellt.

Zusammenfassend erfolgen das Zuschneiden sowie das Verbinden der beiden Separatorfolienausschnitte also in einem Arbeitsgang.

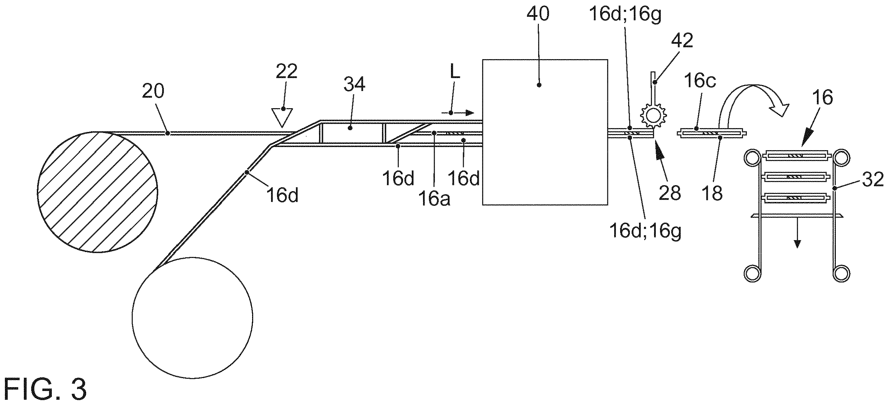

Die Fig. 3 zeigt schematisch einen Verfahrensablauf zur Herstellung der Kathodenvorrichtung 16 gemäß einer ersten Ausgestaltung einer zweiten Variante des Verfahrens. Dabei werden zunächst die ersten beiden Schritte der ersten Variante ausgeführt, also die Kathode 16a aus dem Kathodenband 20 ausgeschnitten.

In einem dritten Schritt der ersten Ausgestaltung der zweiten Variante wird eine einzelne bandförmige Separatorfolie 16d mittels einer Falzvorrichtung 34 unter Bildung einer Knickkante 36 gefalzt. Dabei wird die Separatorfolie 16d derart gefalzt, dass die Knickkante 36 in Band-Längsrichtung L verläuft. Die gefalzte Separatorfolie 16d wird derart an der Kathode 16a angeordnet, dass die Knickkante 36 der Separatorfolie 16d an einer Anlage-Stirnseite 38 der Kathode 16a anliegt, wobei hier die Anlage-Stirnseite 38 die zweite, der ersten Stirnseiten 18 gegenüberliegende Stirnseite 30 ist. Dabei wird die Kathode 16a beidseitig von jeweils einem Separatorfolienabschnitt 16g der Separatorfolie 16d überdeckt.

Darauf folgend wird die Kathode 16a in einem vierten Schritt mit den beiden Separatorfolienabschnitten 16g mittels einer Laminationsanlage 40 laminiert.

Anschließend wird in einem gemeinsamen fünften Schritt die Separatorfolie 16d bzw. die Separatorfolienabschnitte 16g in einem Bereich 28 vor und nach der Kathode 16 bezüglich der Band-Längsrichtung L mittels eines Lasers 42 zugeschnitten. Somit wird die Separatorfolie 16d bzw. die Separatorfolienabschnitte 16g in einem über die Kathode 16a ragenden Bereich von an die Anlage-Stirnseite 38 angrenzenden Stirnseiten zugeschnitten. Dabei verschmelzen die beiden Separatorfolienabschnitte 16g aufgrund der Einwirkung des Lasers 42 auf die Separatorfolienabschnitte 16g.

In einem sechsten Schritt wird die Kathodenvorrichtung 16 in ein Magazin 32 eingebracht und zur Herstellung eines Elektrodenverbundes 12 bereitgestellt.

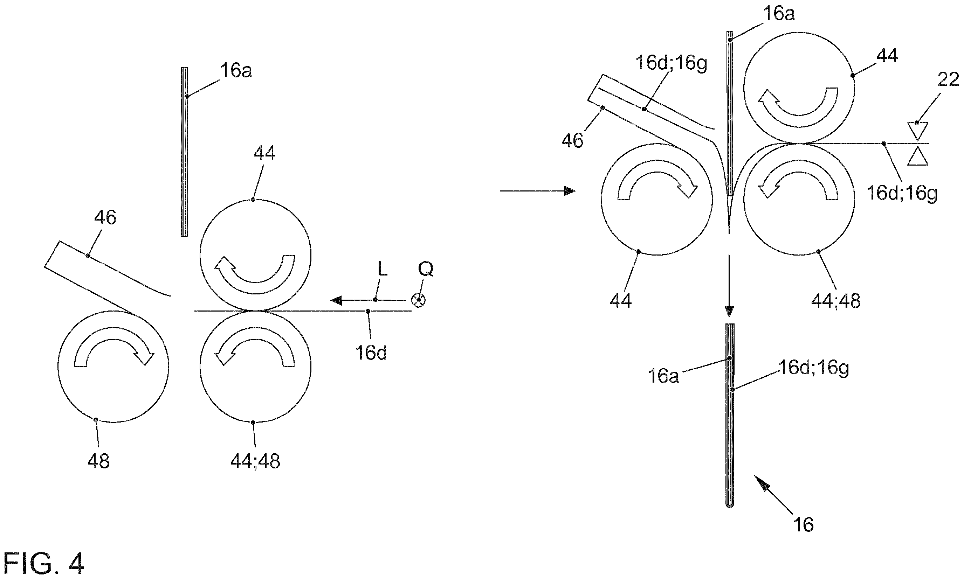

Fig. 4 zeigt schematisch einen Verfahrensablauf auf, der grundsätzlich auch zur Herstellung der Kathodenvorrichtung 16 geeignet ist. Dieser wird hier und im Folgenden als zweite Ausgestaltung der zweiten Variante des Verfahrens bezeichnet. Hierbei erfolgen die ersten beiden Schritte analog zur ersten Ausgestaltung.

Im dritten Schritt wird die einzelne bandförmige Separatorfolie 16d mittels der Falzvorrichtung 34 unter Bildung der Knickkante 36 allerdings derart gefalzt, dass die Knickkante 36 senkrecht zur Band-Längsrichtung L und parallel zur flächigen Seite der Separatorfolie 16d, also in einer Band-Querrichtung Q, verläuft. Hierzu wird das Ende der Separatorfolie 16 mittels Förderwalzen 44 in eine gegen die Förderrichtung geneigte Aufnahme 46 eingebracht und unter Bildung der beiden Separatorfolienabschnitte 16g gefalzt, wobei das Falzen aufgrund der Neigung der Aufnahme 46 erleichtert ist.

In einem vierten Schritt wird die Separatorfolie senkrecht zur Band-Längsrichtung L abgelängt, also mittels einer weiteren Schneidvorrichtung 22 abgeschnitten und die Kathode 16a zwischen die beiden Separatorfolienabschnitte 16g eingebracht.

In einem fünften Schritt wird die Kathode 16a mit den Separatorfolienabschnitten 16g mittels Laminierwalzen 48 laminiert. Hierbei wird diejenige Förderwalze 42 auch als Laminierwalze 44 verwendet, welche derjenigen Seite der Separatorfolie 16d abgewandt ist, von welcher die Kathode 16a zwischen die Separatorfolienabschnitte 16g eingebracht wird.

In einem sechsten, nicht weiter dargestellten Schritt wird die Kathodenvorrichtung 16 in analoger Weise in ein Magazin 32 eingebracht und zur Herstellung eines Elektrodenverbundes 12 bereitgestellt.

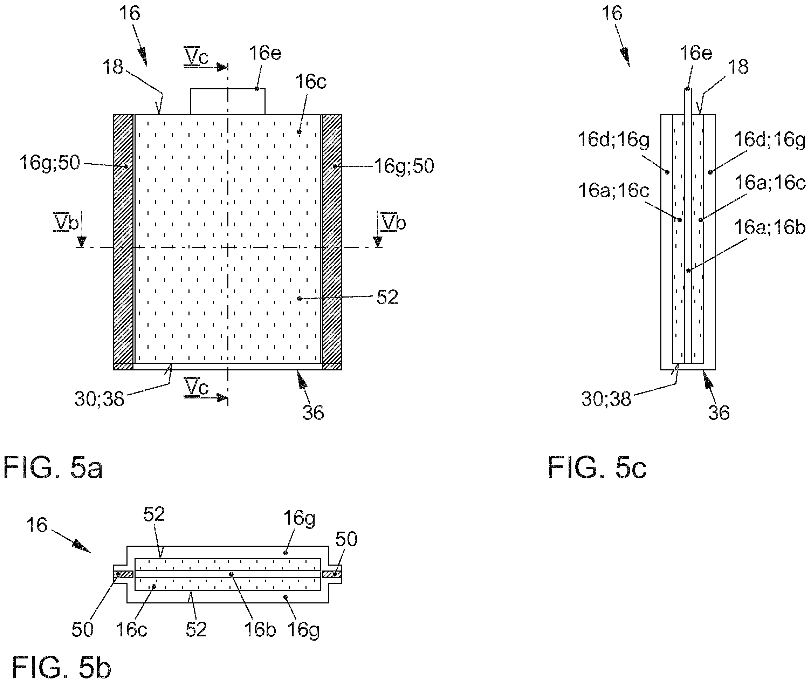

Die Figuren 5a bis 5c zeigen die nach der zweiten Variante des Verfahrens hergestellte Kathodenvorrichtung 16. Die als Anlage-Stirnseite 38 herangezogene, und der ersten Stirnseite 18 gegenüberliegende, zweite Stirnseite 30 liegt an der Knickkante 36 der Separatorfolie 16d an. Die Separatorfolie 16d umfasst also die Kathode 16a. Die Separatorfolie 16d ist dabei zum Zwecke einer besseren Erkennbarkeit des zweiten Aktivmaterials 16c in der Fig. 5a transparent dargestellt. Diejenigen Bereiche 50 der beiden Separatorfolienabschnitte 16g, welche miteinander verschmolzen, also miteinander verbunden sind, sind hier schraffiert dargestellt. Diese erstrecken sich dabei im Bereich der an die erste Stirnseite 18 und an die zweite Stirnseite 30 angrenzenden Stirnseiten. Aufgrund des Verschmelzens der beiden Separatorfolienabschnitte 16g und der Knickkante 36 ist mittels der Separatorfolie 16d eine Tasche gebildet, in welcher die Kathode 16a sicher gegen ein Verrutschen aufgenommen ist. Die mit den Separatorfolienabschnitten 16g laminierten flächigen Seiten der Kathode 16a sind mit dem Bezugszeichen 52 versehen.

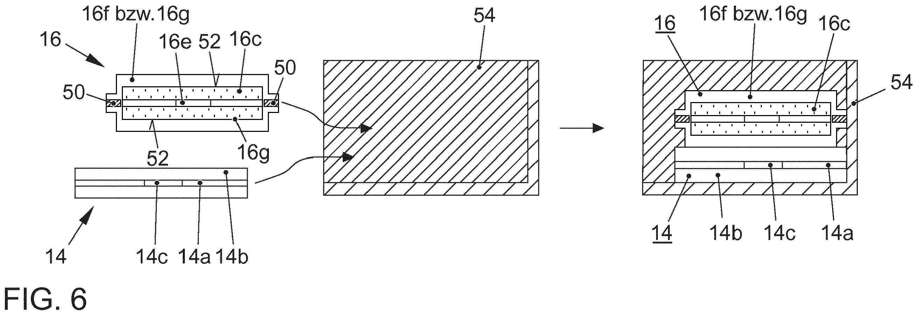

In der Fig. 6 ist schematisch ein Verfahrensablauf zur Herstellung des Elektrodenverbundes 12 dargestellt. Hierbei wird die Anode 14 bereitgestellt. Die Kathodenvorrichtung 16 wurde in einer der oben dargestellten Verfahren derart hergestellt, dass dessen Abmessung, also dessen Ausdehnung in einer durch dessen Separatorfolienausschnitte 16f bzw. durch dessen Separatorfolienabschnitte 16g aufgespannten Ebene, mit der Abmessung der Anode 14, also deren Ausdehnung in einer durch deren Anodenfolie 14a aufgespannten Ebene, übereinstimmt.

Hierzu wird in der ersten Variante und in der ersten Ausgestaltung der zweiten Variante des Verfahrens zur Herstellung der Anodenvorrichtung 16 die Separatorfolienausschnitte 16f bzw. die Separatorfolienabschnitte 16g entsprechend zugeschnitten. Bei Herstellung der Anodenvorrichtung 16 gemäß der zweiten Ausgestaltung der zweiten Variante des Verfahrens, wird die Ausdehnung der Separatorfolie 16d in Band-Querrichtung Q entsprechend gewählt, oder alternativ entsprechend zurechtgeschnitten. Hierzu wird beispielsweise der Laser 42 herangezogen, so dass die beiden Separatorfolienabschnitte 16g in den entsprechenden Bereichen miteinander verschmelzen.

Anschließend werden die Kathodenvorrichtung 16 und die Anode 14 übereinander gestapelt. Die Kathodenvorrichtung 16 und die Anode 14 werden dabei mittels eines Anschlags 54 zueinander ausgerichtet. Dabei ist zum Zwecke einer besseren Verständlichkeit derjenige Abschnitt des Anschlags 54, welcher mit Blick auf die Zeichenebene hinter der Anode 14 bzw. hinter der Kathodenvorrichtung 16 angeordnet ist, stärker schraffiert dargestellt als der L-Förmige, senkrecht zur Zeichenebene verlaufende Abschnitt des Anschlags 54.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Elektromotor
- 6: Wechselrichter
- 8: Batterie
- 10: Batteriezelle
- 12: Elektrodenverbund
- 14: Anode
- 14a: Anodenfolie
- 14b: erstes Aktivmaterial
- 14c: Kontaktierung
- 16: Kathodenvorrichtung
- 16a: Kathode
- 16b: Kathodenfolie
- 16c: zweites Aktivmaterial
- 16d: Separatorfolie
- 16e: Kontaktierung
- 16f: Separatorfolienausschnitt
- 16g: Separatorfolienabschnitt
- 18: erste Stirnseite
- 20: Kathodenband
- 22: Schneidvorrichtung
- 24: Fördervorrichtung
- 26: Rollenmesser
- 28: Bereich
- 30: zweite Stirnseite
- 32: Magazin
- 34: Falzvorrichtung
- 36: Knickkante
- 38: Anlage-Stirnseite
- 40: Laminationsanlage
- 42: Laser
- 44: Förderwalzen
- 46: Aufnahme
- 48: Förderwalzen
- 50: verschmolzener Bereich
- 52: laminierte Fläche
- 54: Anschlag

- L: Band-Längsrichtung
- Q: Band-Längsrichtung

## Patentansprüche

1. Verfahren zur Herstellung einer Kathodenvorrichtung (16) für eine Batterie (8), insbesondere eines Kraftfahrzeugs (2),
- wobei ein Kathodenband (20) bereitgestellt wird,
- wobei eine Kathode (16a) aus dem Kathodenband (20) ausgeschnitten wird,
- wobei die Kathode (16a) zwischen zwei bandförmige Separatorfolien (16d) eingebracht wird, und
- wobei die beiden Separatorfolien (16d) unter Bildung von entsprechenden Separatorfolienausschnitten (16f) in einem über die Kathode (16a) ragenden Bereich (28) zugeschnitten und die beiden Separatorfolienausschnitte (16f) in diesem Bereich (28) miteinander verbunden, insbesondere miteinander verschmolzen, werden, oder
- - wobei eine einzelne bandförmige Separatorfolie (16d) gefalzt und derart an der Kathode (16a) angeordnet wird, dass die Knickkante der Separatorfolie (16d) an einer Anlage-Stirnseite (38) der Kathode (16a) anliegt, und dass die Kathode (16a) beidseitig von jeweils einem Separatorfolienabschnitt (16g) der Separatorfolie (16d) überdeckt wird, wobei die bandförmige Separatorfolie (16d) mit einer Knickkante (36) entlang deren Band-Längsrichtung (L) gefalzt wird, und wobei die Separatorfolie (16d) in einem Bereich von Stirnseiten der Kathode (16a) zugeschnitten wird, welcher sowohl über die Kathode (16a) ragt als auch der Anlage-Stirnseite (38) abgewandt ist, und die beiden Separatorfolienabschnitte (16g) miteinander verbunden, insbesondere miteinander verschmolzen, werden,
**dadurch gekennzeichnet,**
**dass** die beiden Separatorfolienausschnitte (16f) oder die beiden Separatorfolienabschnitte (16g) beim Zuschneiden miteinander verbunden werden.

2. Verfahren nach Anspruch 1,
**dadurch gekennzeichnet,**
**dass** zum Zuschneiden und zum Verbinden der beiden Separatorfolienausschnitte (16f) bzw. der beiden Separatorfolienabschnitte (16g) in einem gemeinsamen Schritt ein Laser (42) oder ein beheiztes Rollenmesser (26) herangezogen wird.

3. Verfahren nach Anspruch 1 oder 2,
**dadurch gekennzeichnet,**
**dass** die Kathode (16a) mit den Separatorfolienausschnitten (16f) bzw. mit den Separatorfolienabschnitten (16g) in einem Schritt vor dem Zuschneiden der Separatorfolien (16d) bzw. der Separatorfolie (16d) laminiert wird.

4. Verfahren zur Herstellung eines Elektrodenverbundes (12),
- wobei eine Anode (14) bereitgestellt wird,
- wobei eine Kathodenvorrichtung (16) gemäß dem Verfahren nach einem der Ansprüche 1 bis 3 hergestellt wird, wobei diese derart zugeschnitten ist, dass die Abmessung deren Separatorfolienabschnitte (16g) bzw. deren Separatorfolienausschnitte (16f) mit der Abmessung der Anode (14) übereinstimmt, und
- wobei die Anode (14) und die Kathodenvorrichtung (16) gestapelt und mittels eines Anschlags (54) zueinander ausgerichtet werden.

5. Batterie (8), mit einem nach Anspruch 4 hergestellten Elektrodenverbund (12).

6. Kraftfahrzeug (2) mit einer Batterie (8) nach Anspruch 5.

## Claims

1. Method for producing a cathode device (16) for a battery (8), in particular of a motor vehicle (2),
- wherein a cathode strip (20) is provided,
- wherein a cathode (16a) is cut out of the cathode strip (20),
- wherein the cathode (16a) is introduced between two strip-type separator films (16d), and
- wherein the two separator films (16d) are cut to size to form corresponding separator film segments (16f) in a region (28) projecting over the cathode (16a) and the two separator film segments (16f) are connected to one another, in particular fused to one another, in this region (28), or
- - wherein a single strip-type separator film (16d) is folded and arranged on the cathode (16a) in such a way that the bent edge of the separator film (16d) bears against a bearing side face (38) of the cathode (16a), and that the cathode (16a) is covered on both sides by a respective separator film section (16g) of the separator film (16d), wherein the strip-type separator film (16d) is folded with a bent edge (36) along the strip longitudinal direction (L) thereof, and wherein the separator film (16d) is cut to size in a region of side faces of the cathode (16a) which both projects over the cathode (16a) and faces away from the bearing side face (38), and the two separator film sections (16g) are connected to one another, in particular fused to one another,
**characterized**
**in that** the two separator film segments (16f) or the two separator film sections (16g) are connected to one another during the cutting to size.

2. Method according to Claim 1,
**characterized**
**in that** a laser (42) or a heated rotary cutter (26) is used for cutting to size and for connecting the two separator film segments (16f) or the two separator film sections (16g) in a common step.

3. Method according to Claim 1 or 2,
**characterized**
**in that** the cathode (16a) is laminated with the separator film segments (16f) or with the separator film sections (16g) in a step before the cutting to size of the separator films (16d) or the separator film (16d).

4. Method for producing an electrode assembly (12),
- wherein an anode (14) is provided,
- wherein a cathode device (16) is produced in accordance with the method according to any of Claims 1 to 3, wherein said cathode device is cut to size in such a way that the dimensioning of its separator film sections (16g) or its separator film segments (16f) matches the dimensioning of the anode (14), and
- wherein the anode (14) and the cathode device (16) are stacked and aligned with one another by means of a stop (54) .

5. Battery (8), comprising an electrode assembly (12) produced according to Claim 4.

6. Motor vehicle (2) comprising a battery (8) according to Claim 5.

## Revendications

1. Procédé de réalisation d'un dispositif cathodique (16) destiné à une batterie (8), notamment d'un véhicule automobile (2),
- une bande cathodique (20) étant prévue,
- une cathode (16a) étant découpée dans la bande cathodique (20),
- la cathode (16a) étant insérée entre deux films séparateurs (16d) en forme de bande, et
- les deux films séparateurs (16d) étant découpés pour former des découpes de film séparateur correspondantes (16f) dans une zone (28) faisant saillie de la cathode (16a) et les deux découpes de film séparateur (16f) étant reliées, notamment fusionnées, l'une à l'autre dans cette zone (28), ou
- un seul film séparateur (16d) en forme de bande étant plié et disposé sur la cathode (16a) de manière que le bord de pliage du film séparateur (16d) vienne en appui sur un côté d'appui frontal (38) de la cathode (16a) et que la cathode (16a) soit recouverte des deux côtés par une portion (16g) du film séparateur (16d), le film séparateur (16d) en forme de bande étant plié avec un bord de pliage (36) suivant la direction longitudinale (L) de la bande, et le film séparateur (16d) étant découpé dans une zone des côtés frontaux de la cathode (16a) qui fait saillie de la cathode (16a) et qui est dirigée à l'opposé du côté d'appui frontal (38), et les deux portions de film séparateur (16g) étant reliées, en particulier fusionnées, l'une à l'autre,
**caractérisé en ce que**
les deux découpes de film séparateur (16f) ou les deux portions de film séparateur (16g) sont reliées l'une à l'autre lors de la découpe.

2. Procédé selon la revendication 1,
**caractérisé en ce que**
un laser (42) ou un couteau à rouleau chauffé (26) est utilisé pour découper et relier les deux découpes de film séparateur (16f) ou les deux portions de film séparateur (16g) dans une étape commune.

3. Procédé selon la revendication 1 ou 2,
**caractérisé en ce que**
la cathode (16a) est laminée avec les découpes de film séparateur (16f) ou avec les portions de film séparateur (16g) dans une étape précédant la découpe des films séparateurs (16d) ou du film séparateur (16d).

4. Procédé de fabrication d'un composite d'électrode (12),
- une anode (14) étant prévue,
- un dispositif cathodique (16) étant fabriqué selon le procédé selon l'une des revendications 1 à 3, ledit dispositif cathodique étant découpé de manière que la dimension de ses portions de film séparateur (16g) ou de ses découpes de film séparateur (16f) corresponde à la dimension de l'anode (14), et
- l'anode (14) et le dispositif cathodique (16) étant empilés et orientés l'un par rapport à l'autre au moyen d'une butée (54).

5. Batterie (8), comprenant un composite d'électrode (12) réalisé selon la revendication 4.

6. Véhicule automobile (2) comprenant une batterie (8) selon la revendication 5.
